# EUROPÄISCHE PATENTANMELDUNG

(11) **EP 4 557 663 A1**
(43) Veröffentlichungstag der Anmeldung: **21.05.2025**
(21) Anmeldenummer: 23210914.0
(22) Anmeldetag: 20.11.2023
(51) Int. Cl.: H04L 9/40, G06F 21/55, G06F 21/56, G06F 11/14

(54) **WIEDERHERSTELLUNG EINES GERÄTS UMFASSEND EINE ANWENDERSPEZIFISCHE WIEDERHERSTELLUNGSAKTION**

(71) Anmelder: Siemens Aktiengesellschaft, 80333 München (DE)
(72) Erfinder: Falk, Rainer, 85435 Erding (DE); Fries, Steffen, 85598 Baldham (DE)
(74) Vertreter: Siemens Patent Attorneys

(57) **Zusammenfassung**

Die Erfindung betrifft ein Modul (2) zur Wiederherstellung eines Geräts (D),
aufweisend:
- eine Empfangseinheit, ausgebildet eine Nachricht (14) bezüglich eines stattgefundenen Angriffs auf das Gerät (D) zu empfangen,
- eine Konfigurationseinheit, ausgebildet mindestens eine anwenderspezifische Wiederherstellungsaktion (22) in ein Computerprogramm für die Wiederherstellung des Geräts (D) zu konfigurieren, und
- eine Wiederherstellungseinheit (23), ausgebildet die Wiederherstellung des Geräts anhand des Computerprogramms zur Gerätewiederherstellung bei Vorliegen der Nachricht (14) bezüglich des stattgefundenen Angriffs auszuführen.

Außerdem betrifft die Erfindung ein übergeordnetes Gerät und ein zugehöriges Verfahren zum Wiederherstellen eines Geräts.

## Beschreibung

Unabhängig vom grammatikalischen Geschlecht eines bestimmten Begriffes sind Personen mit männlicher, weiblicher oder anderer Geschlechteridentität mit umfasst.

### HINTERGRUND DER ERFINDUNG

### Gebiet der Erfindung

Die Erfindung betrifft ein Modul zur Wiederherstellung eines Geräts. Außerdem betrifft die Erfindung ein übergeordnetes Gerät und ein zugehöriges Verfahren zum Wiederherstellen eines Geräts.

### Beschreibung des Stands der Technik

Die Software, insbesondere Firmware, von IoT-Geräten insbesondere von industriellen Steuergeräten, weist in der Praxis Schwachstellen auf. Da sie mit externen Systemen vernetzt sind, können die Schwachstellen auch aus der Ferne ausgenutzt werden. Da Schwachstellen nur zeitlich verzögert gepatcht werden können, sind IoT-Geräte grundsätzlich angreifbar.

Es ist üblich, dass Schwachstellen durch das Einspielen von Firmware-Updates oder von Security-Patchen geschlossen werden.

Es sind außerdem Technologien bekannt, die das Ausnutzen von Schwachstellen durch einen Angreifer zumindest erschweren (Exploit Protection), insbesondere Stack-Randomisierung (ASLR); Stack Protection (z.B. Stack Canaries oder Shadow Stack), Control Flow Integrity (CFI), Virenscanner und Hostbasierte Angriffserkennungssysteme (HIDS). Weiterhin sind Hypervisor und Mandatory Access Control Systeme (z.B. SELinux, AppArmor) zur Isolation von Applikationen bekannt. Weiterhin sind Firewalls, Netzwerk-basierte Angriffserkennungssysteme und Systeme zur Logdaten-Auswertung bekannt.

Es ist außerdem bekannt, dass auf tieferer Hardware-Ebene Angriffe erkannt werden können:
- Dover Microsystems: Überwachung auf einem Prozessor/SoC, dass die von der CPU ausgeführten Befehle mit definierten Security-Regeln übereinstimmen ("monitoring every instruction executed to ensure it complies with a set of security, safety, and privacy rules")
- On-chip monitoring: UltraSoc / Siemens Tessent Embedded Analytics. Dabei kann das Chip-interne Verhalten, z.B. Speicherzugriffe, erfasst und ausgewertet werden.
- Von Jintide ist bekannt, das IO-Verhalten und das Speicherzugriffsverhalten einer CPU zu überwachen, siehe Zhu, J.; Luo, A.; Li, G.; Zhang, B.; Wang, Y.; Shan, G.; Li, Y.; Pan, J.; Deng, C.; Yin, S.; Wei, S.; Liu, L., "Jintide: Utilizing Low-Cost Reconfigurable External Monitors to Substantially Enhance Hardware Security of Large-Scale CPU Clusters", IEEE Journal of Solid-State Circuits, vol. 56, issue 8, p. 2585 - 2601
- Von X-PHY ist bekannt, dass Zugriffe auf einen SSD-Speicher durch eine auf dem SSD-Speicher integrierte AI-Engine erkannt werden können und dass als Reaktion ein weiterer Zugriff gesperrt werden kann.
- Power Fingerprinting: Überwachung des Stromverbrauchsprofils oder der elektromagnetischen Abstrahlung eines Geräts

Ansätze für "Resilience under Attack" und ein verlässliches, automatisierbares Recovery nach einem erfolgreichen Security-Angriff sind in folgenden Publikationen beschrieben:
- TCG Cyber Resilient Module and Building Block Requirements: Das beschriebene "Cyber Resilient Module" ist jedoch auf eine separate "Resilience Authority"-Einheit angewiesen, die dem CRM (bzw. dessen Resilience Engine) Anweisungen zu den durchzuführenden Recovery-Aktionen übermittelt.
- NIST Platform Firmware Resiliency Guidelines, NIST SP 800-193: Dadurch ist bekannt, dass ein Computer-System (Server) eine "root of trust for recovery" aufweisen kann, über den das Computer-System nach einem Angriff remote und verlässlich wieder in einen integeren Zustand neu aufgesetzt werden kann.
- Rainer Falk, Steffen Fries: Enhancing Attack Resilience in the Presence of Manipulated IoT Devices within a Cyber Physical System, The Sixth International Conference on Cyber-Technologies and Cyber-Systems CYBER 2021, 3-7 October 2021, Barcelona, Spain: Dadurch ist ein übergeordnetes Integrity-Monitoring in industriellen Systemen bekannt, sowie dass in Steuergeräten/IoT-Geräten/Servern eine speziell geschützte Ausführungsumgebung vorbereitet sein kann, um auch bei oder nach einem erfolgreichen Angriff auf ein Gerät auf diesem noch gewisse Funktionen verlässlich ausführen zu können.

Bekannt ist ebenfalls, bei einem Firmware Update ein festes Default-Firmware-Image oder das letzte lauffähige Firmware-Image vorzuhalten, um bei einem eventuellen Fehler beim Firmware-Update auf ein bekanntes lauffähiges Image zurückzufallen.

Die Aufgabe der Erfindung besteht darin, eine Lösung bereitzustelle, welche das Risiko, das von angegriffenen Geräten ausgeht, zu minimieren.

### ZUSAMMENFASSUNG DER ERFINDUNG

Die Erfindung ergibt sich aus den Merkmalen der unabhängigen Ansprüche. Vorteilhafte Weiterbildungen und Ausgestaltungen sind Gegenstand der abhängigen Ansprüche. Ausgestaltungen, Anwendungsmöglichkeiten und Vorteile der Erfindung ergeben sich aus der nachfolgenden Beschreibung und den Zeichnungen.

Die Erfindung betrifft ein Modul (auch als eine Geräteeinheit bezeichenbar) zur Wiederherstellung (auch als Recovery bezeichenbar) eines Geräts, aufweisend:
- eine Empfangseinheit, ausgebildet eine Nachricht (auch als ein Recovery trigger bezeichenbar) bezüglich eines stattgefundenen Angriffs (auch als Manipulation bezeichenbar) auf das Gerät zu empfangen,
- eine Konfigurationseinheit, ausgebildet mindestens eine anwenderspezifische Wiederherstellungsaktion (auch als Recovery-Aktion bezeichenbar) in ein Computerprogramm für die Wiederherstellung des Geräts (insbesondere ein Software-Programm (programmiert in Form von Software), eine Vorlage, ein Image, ein Template, eine Projektierung, ein projektierbares Recovery-Image, eine Konfigurationseinstellung) zu konfigurieren, und
- eine Wiederherstellungseinheit, ausgebildet die Wiederherstellung des Geräts anhand des Computerprogramms zur Gerätewiederherstellung bei Vorliegen der Nachricht bezüglich des stattgefundenen Angriffs auszuführen (auch als durchzuführen bezeichenbar). In einer Variante weist das Gerät eine Steuereinheit auf zur Steuerung oder Überwachung eines technischen Prozesses über verbindbare Sensoren und/oder Aktuatoren. Die Wiederherstellungseinheit richtet in dieser Variante bei einer Wiederherstellung die Steuerungsfunktionalität der Steuereinheit des Geräts abhängig von der eingerichteten anwenderspezifische Wiederherstellungsaktion ein. Dadurch realisiert das Gerät beziehungsweise dessen Steuereinheit bei einer Gerätewiederherstellung eine anwenderdefinierbare Steuerungsfunktionalität zur Steuerung oder Überwachung des technischen Prozesses. Weiterhin richtet die Wiederherstellungseinheit in dieser Variante bei einer Wiederherstellung Programmcode und/oder Konfigurationsdaten für die reguläre Steuerungsfunktionalität der Steuereinheit des Geräts abhängig von der eingerichteten anwenderspezifische Wiederherstellungsaktion ein. Nach erfolgter Wiederherstellung kann dadurch die wiederhergestellte, reguläre Steuerungsfunktionalität durch das Gerät beziehungsweise durch dessen Steuereinheit wieder verlässlich erfolgen.

Das Computerprogramm ist insbesondere in eine Speichereinrichtung einer Recheneinheit ladbar und von der Recheneinheit ausführbar.

Nach einem Aspekt der Erfindung wird vorgeschlagen, dass nach Erkennen eines Angriffs (Manipulation) auf das IoT-Gerät durch ein Angriffserkennungssystem des IoT-Geräts zur Laufzeit eine vorgebbare (durch Anwender) Recovery-Aktion auf dem IoT-Gerät automatisch angestoßen und durchgeführt wird. Das IoT-Gerät kann sich dadurch eigenständig in einen verlässlichen Zustand versetzen, d.h. ohne dazu auf eine externe (zentrale) Security-Monitoring- und Geräte-Management-Dienste angewiesen zu sein. Dadurch kann das IoT-Gerät verlässlich ein autonomes Recovery einer betriebskritischen Steuerungsfunktionalität realisieren.

Die Erfindung hat den Vorteil, dass auf dem IoT-Gerät eine vom Anwender vorgebbare, anpassbare, projektierbare Recovery-Aktion durchgeführt wird. Diese ist vom Anwender projektierbar, d.h. er kann das Verhalten eines IoT-Geräts vorgeben, das nach einer erkannten Gerätemanipulation erfolgt. Dies hat den Vorteil, dass ein zuverlässiges Recovery durchgeführt werden kann, aber flexibel entsprechend der Anforderungen des Anwenders. So wird sichergestellt, dass von angegriffenen, manipulierten IoT-Geräten nur ein begrenztes, handhabbares Risiko ausgeht, und dass sie nach einem erfolgreichen Angriff verlässlich und schnell wieder verlässlich in einem integren Zustand aufgesetzt werden können. Die vom Anwender vorgebbare, anpassbare, projektierbare Wiederherstellungsaktion kann auch als anwenderdefinierte Wiederherstellungsaktion bezeichnet werden. Da Nachricht (Recovery trigger) kann beispielsweise ein elektrisches oder optisches Signal sein, oder eine Bitfolge oder Symbolfolge, die über eine Gerätekommunikationsschnittstelle, z.B. SPI, I2C, PCIe, Gerätebus, Rückwandbus, übertragbar ist.

In anderen Worten bietet die Erfindung den Vorteil, dass ein Anwender (Maschinenbauer, Integrator, OT-Betreiber) selbst definieren kann, wie ein angegriffenes Steuergerät reagiert. Das Steuergerät führt die Recovery-Aktion eigenständig durch, d.h. anders als in Server-Umgebungen oder in Consumer-orientierten IoT-Umgebungen ohne Nutzung eines zentralen Management-Systems. Dadurch wird außerdem die Angriffs-Resilienz eines Einzelsystems verbessert. Zusätzlich kommt diese Funktionalität unabhängig davon zur Anwendung, ob eine Netzwerk-Konnektivität besteht.

In einer Weiterbildung der Erfindung ist die Konfigurationseinheit außerdem ausgebildet, mindestens ein herstellerspezifische Wiederherstellungsaktion in das Computerprogramm für die Wiederherstellung (insbesondere eine Firmware und/oder ein vom Gerätehersteller vorgegebenes festes Recovery-Image) des Geräts zu konfigurieren. Die herstellerspezifische Wiederherstellungsaktion ist fest vom Gerätehersteller vorbereitet, d.h. vom Anwender nicht vorgebbar oder anpassbar. Die herstellerspezifische Wiederherstellungsaktion kann auch als geräteherstellerdefinierte Wiederherstellungsaktion bezeichnet werden.

Das Computerprogramm für die Wiederherstellung weist somit außerdem einen herstellerspezifischen Anteil auf. Die Wiederherstellungseinheit führt somit die mindestens ein herstellerspezifische Wiederherstellungsaktion (eine optionale Referenz-Recovery-Firmware, welche Gerätehersteller-definiert ist) und eine Anwender-programmierbare Recovery-Projektierung aus. Es wird somit ein Recovery-Image zur Ausführung gebracht, welches einen Gerätehersteller-definierten Anteil und einen Anwenderdefinierten Anteil umfasst. Diese Kombination ermöglicht ein verlässliches Recovery, das jedoch vom Anwender angepasst ist. Es sind somit ein vom Gerätehersteller vorgegebenes festes Recovery-Image und ein vom Anwender projektierbares Recovery-Image kombiniert.

In einer weiteren Weiterbildung der Erfindung ist die Konfigurationseinheit außerdem ausgebildet, mindestens eine kombinierte anwender- und herstellerspezifische Wiederherstellungsaktion in das Computerprogramm für die Wiederherstellung des Geräts zu konfigurieren.

Nach dieser Ausführungsform sind gegebenenfalls widersprüchliche, d.h. nicht uneingeschränkt zu vereinbarende, d.h. nicht gemeinsam ausführbare anwenderspezifische Wiederherstellungsaktion und herstellerspezifische Wiederherstellungsaktion in einer kombinierte anwender- und herstellerspezifische Wiederherstellungsaktion vereint. Die kombinierte Wiederherstellungsaktion ist nach einer vorgegebenen Richtlinie, welche die Spezifikationen des Anwenders und des Herstellers berücksichtigt und abwägt, erstellt.

In einer weiteren Weiterbildung der Erfindung weist das Computerprogramm für die Wiederherstellung (und damit die mindestens eine anwenderspezifische Wiederherstellungsaktion) einen Modifikationsschutz auf.

Weiterhin ist dadurch insbesondere vorgesehen, das Computerprogramm für die Wiederherstellung (die Recovery-Konfigurationseinstellung) zu versiegeln, d.h. einen Schutz vorzusehen, dass sie nicht modifizierbar ist (entweder einmalig festlegbar oder nur komplett über Factory-Reset o.ä. rücksetzbar). Weiterhin ist es möglich, dass die Recovery-Konfigurationseinstellung nur nach Bereitstellen eines gültigen Wiederherstellungs-Modifikations-Codes, beispielsweise in Form eines über eine Nutzerschnittstelle eingegebenen numerischen Codes oder einer alphanumerischen Zeichenkette oder in Form eines über eine Kommunikationsschnittstelle oder Netzwerkschnittstelle bereitgestellten Autorisierungstokens, modifizierbar oder ersetzbar ist.

In einer weiteren Weiterbildung der Erfindung wurde der stattgefundene Angriff erkannt anhand von:
- einem Host-Based Intrusion Detection System (HIDS) und/oder
- einer Überwachung auf Hardwareebene, insbesondere von Bus-Zugriffen, Ein- und Ausgabeschnittstellen-Zugriffen, Speicherzugriffen, einem Power Fingerprinting, einem Auslösen von Exploit Protection Schutzmaßnahmen, insbesondere einer Verletzung einer Control-Flow-Integritätsüberwachung oder eines Stack-Schutzes.
- einem host-externen Signal, z.B. aus einem Sensor, der eine Änderung der Betriebsumgebung signalisieret (z.B. Brandmelder).

In einer weiteren Weiterbildung der Erfindung ist die Empfangseinheit ausgebildet, die Nachricht bezüglich des stattgefundenen Angriffs (auch als "Recovery trigger" bezeichenbar) von einem Modul zur Angriffserkennung zu empfangen.

Das Modul zur Angriffserkennung ist insbesondere als Komponente des Geräts ausgebildet.

In einer weiteren Weiterbildung der Erfindung berücksichtigt die Nachricht bezüglich des stattgefundenen Angriffs eine anwenderspezifische Geräteintegritätsrichtlinie.

Nach dieser Ausführungsform ist die anwenderspezifische Geräteintegritätsrichtlinie (Device Integrity Monitoring Policy) zusätzlich zu der anwenderspezifischen Wiederherstellungsaktionen (Recovery-Aktion) vom Anwender konfigurierbar.

In einer weiteren Weiterbildung der Erfindung ist die Konfigurationseinheit ausgebildet, eine Vielzahl von anwenderspezifischen Wiederherstellungsaktionen (auch als Recovery-Aktion bezeichenbar) in das Computerprogramm für die Wiederherstellung des Geräts zu konfigurieren.

In einer weiteren Ausführungsform können eine Mehrzahl (im Sinne von Plural, d.h. eine Vielzahl) von Recovery-Aktionssätzen und zugeordnete Auswahlregeln projektiert sein. Ein Recovery-Aktionssatz umfasst eine oder mehrere Recovery-Aktionen.

In einer weiteren Weiterbildung der Erfindung ist die Konfigurationseinheit ausgebildet, die mindestens eine anwenderspezifische Wiederherstellungsaktion (auch als Recovery-Aktion bezeichenbar) in das Computerprogramm für die Wiederherstellung des Geräts in Abhängigkeit des stattgefundenen Angriffs zu konfigurieren.

Abhängig von der Art des stattgefundenen Angriffs wird zumindest einer der anwenderspezifische Wiederherstellungsaktionen (oder der projektierten Recovery-Aktionssätze) abhängig von projektierten Auswahlregeln ausgewählt und umgesetzt. Dies ermöglicht, dass ein Anwender eine spezifische Resilienz-Reaktion abhängig von der Art des stattgefundenen Angriffs oder der erkannten Manipulation, einrichten kann.

In einer weiteren Weiterbildung der Erfindung ist die Konfigurationseinheit ausgebildet, die mindestens eine anwenderspezifische Wiederherstellungsaktion (auch als Recovery-Aktion bezeichenbar) in das Computerprogramm für die Wiederherstellung des Geräts in Abhängigkeit einer Integritätsverletzung durch den stattgefundenen Angriff zu konfigurieren.

Abhängig von der Art der erkannten Integritätsverletzung wird zumindest eine der anwenderspezifische Wiederherstellungsaktionen (oder der mehreren projektierten Recovery-Aktionssätze) abhängig von projektierten Auswahlregeln ausgewählt und umgesetzt. Dies ermöglicht, dass ein Anwender eine spezifische Resilienz-Reaktion abhängig von der Art einer Integritätsverletzung, d.h. abhängig von dem erkannten Angriff oder der erkannten Manipulation, einrichten kann.

In einer weiteren Weiterbildung der Erfindung ist die mindestens eine anwenderspezifische Wiederherstellungsaktion ausgebildet als:
- ein Anhalten eines Prozessors des Geräts, (insbesondere ein Anhalten einer CPU des Geräts durch ein (HALT-Signal)
- ein Sperren von mindestens einer Ein- und AusgabeSchnittstelle des Geräts, (insbesondere ein Versetzen der Ein- und Ausgabe-Schnittstelle/IO-Schnittstelle/IO-Interface in einen definierten Fail-Safe-State)
- ein Sperren eines Zugriffs auf mindestens eine Zusatzkomponente des Geräts, (insbesondere einen Zugriff auf IO-Schnittstelle und/oder auf ein Secure Element durch den Prozessor des Geräts)
- ein Sperren und/oder ein Einschränken (insbesondere durch eine Firewall) von mindestens einem Kommunikationsmodul des Geräts,
- ein Sperren und/oder ein Einschränken (insbesondere durch eine Firewall) von mindestens einer Kommunikationsschnittstelle des Geräts, (insbesondere ein Sperren und/oder ein Einschränken von Ethernet, WLAN, 5G, sodass der Prozessor (CPU) des Geräts nur noch eingeschränkt Daten über die mindestens eine Kommunikationsschnittstelle senden und/oder empfangen kann), und/oder
- ein Löschen und/oder ein Archivieren eines Arbeitsspeichers des Geräts, (insbesondere in Kombination mit einem Archivieren für eine nachgelagerte Auswertung (z.B. in einen freien Speicherbereich im Flash) oder mit einem Übertragen eines Speicherinhalts an ein externes Analysesystem.)

Die Erfindung umfasst außerdem ein Gerät aufweisend ein erfindungsgemäßes Modul.

In einer Weiterbildung der Erfindung ist das Gerät ausgebildet als:
- ein Steuergerät,
- ein Internet-of-Things-Gerät,
- ein eingebettetes System,
- ein industrielles Steuergerät und/oder
- eine speicherprogrammierbare Steuerung (PLC).

In einer weiteren Weiterbildung der Erfindung
14. Gerät nach Anspruch 12 oder 13,
außerdem aufweisend:
- ein Modul zur Angriffserkennung.

Die Funktionalität zur Angriffserkennung und (wie auch zum Durchführen einer Recovery-Aktion) ist in das Gerät direkt integriert (vorzugsweise) als separate (als Modul lokal am Gerät, verbunden über einen Schnittstelle und dadurch speziell schützbar, d.h. aber nicht extern des Geräts), damit verbundene Komponente realisiert, insbesondere als Technologiemodul, als Speichermodul (SD-Card-Formfaktor, SSD-Formfaktor, USB-Stick-Formfaktor) oder als Erweiterungsmodul (insbesondere als PCIe-Steckmodul).

Die Erfindung umfasst außerdem ein Verfahren zum Wiederherstellen (auch als Recovery bezeichenbar) eines Geräts,
mit den Schritten:
- ein Empfangen einer Nachricht (auch als Recovery trigger bezeichenbar) bezüglich eines stattgefundenen Angriffs (auch als Manipulation bezeichenbar) auf das Gerät,
- ein Konfigurieren mindestens einer anwenderspezifischen Wiederherstellungsaktion (auch als Recovery-Aktion bezeichenbar) in ein Computerprogramm für die Wiederherstellung des Geräts (insbesondere ein Software-Programm (programmiert in Form von Software), eine Vorlage, ein Image, ein Template, eine Projektierung, ein projektierbares Recovery-Image, eine Konfigurationseinstellung), und
- ein Ausführen (auch als Durchführen bezeichenbar) des Wiederherstellens des Geräts anhand des Computerprogramms zur Gerätewiederherstellung bei Vorliegen der Nachricht bezüglich des stattgefundenen Angriffs.

### KURZE BESCHREIBUNG DER ZEICHNUNGEN

Die Besonderheiten und Vorteile der Erfindung werden aus den nachfolgenden Erläuterungen mehrerer Ausführungsbeispiele anhand der schematischen Zeichnung ersichtlich.

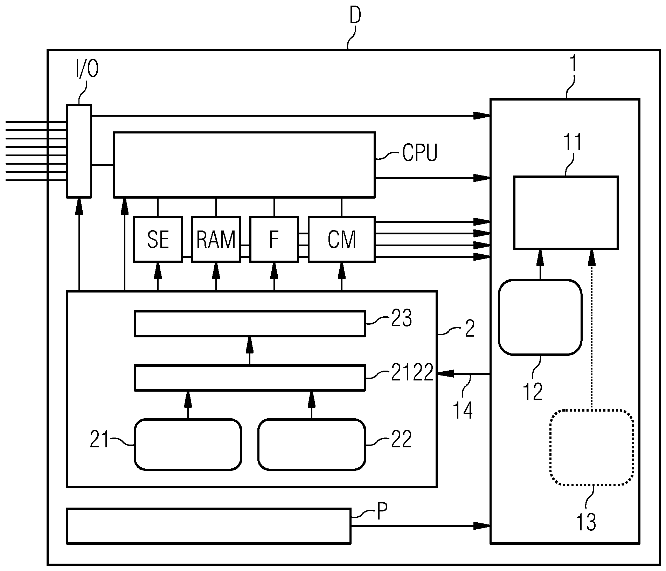

Es zeigt
- Fig. 1: ein erfindungsgemäßes Gerät.

### DETAILLIERTE BESCHREIBUNG DER ERFINDUNG

Fig. 1 zeigt ein Steuergerät D, insbesondere ein industrielles IoT Gerät D, mit einem Prozessor CPU, Programm- und Konfigurationsspeicher F, auch als Flash bezeichenbar F, Arbeitsspeicher RAM, einem Kommunikationsmodul CM, einem Sicherheitselement SE, einer Ein-Ausgabeschnittstelle I/O zum Verbinden von Sensoren und Aktuatoren und einer Power Management Unit P, auch als Energiemanagementeinheit bezeichenbar P.

Das Steuergerät D verfügt weiterhin über eine Komponente zur Integritätsüberwachung 1 des Geräts D, auch als Device-autonomous Device Integrity Monitoring Modul 1 bezeichenbar, das einen Runtime Health Check 11 realisiert. Zur Überprüfung ist eine feste, vom Gerätehersteller vorgegebene Policy 12 und erfindungsgemäß eine vom Anwender projektierbare Policy 13 verwendbar.

Das Steuergerät D weist weiterhin das erfindungsgemäße Resilienz-Modul 2, auch als Device Resilience Module 2 bezeichenbar, auf, welches eine Recovery Engine aufweist 23, welche bei einer durch einen Recovery Trigger 14 erkannten Gerätemanipulation eine vom Anwender anpassbare, d.h. projektierbare Recovery-Aktion durchführt. Im dargestellten Fall werden dazu ein vom Gerätehersteller vorgegebenes festes Recovery-Image 21 und ein vom Anwender projektierbares Recovery-Image 22 durch einen Recovery-Image-Combiner 2122 kombiniert.

Obwohl die Erfindung im Detail durch die Ausführungsbeispiele näher illustriert und beschrieben wurde, ist die Erfindung durch die offenbarten Beispiele nicht eingeschränkt und andere Variationen können vom Fachmann daraus abgeleitet werden, ohne den Schutzumfang der Erfindung zu verlassen.

## Patentansprüche

1. Modul (2) zur Wiederherstellung eines Geräts (D), aufweisend:
- eine Empfangseinheit, ausgebildet eine Nachricht (14) bezüglich eines stattgefundenen Angriffs auf das Gerät (D) zu empfangen,
- eine Konfigurationseinheit, ausgebildet mindestens eine anwenderspezifische Wiederherstellungsaktion (22) in ein Computerprogramm für die Wiederherstellung des Geräts (D) zu konfigurieren, und
- eine Wiederherstellungseinheit (23), ausgebildet die Wiederherstellung des Geräts anhand des Computerprogramms zur Gerätewiederherstellung bei Vorliegen der Nachricht (14) bezüglich des stattgefundenen Angriffs auszuführen.

2. Modul nach Anspruch 1,
wobei die Konfigurationseinheit außerdem ausgebildet ist, mindestens ein herstellerspezifische Wiederherstellungsaktion (21) in das Computerprogramm für die Wiederherstellung des Geräts zu konfigurieren.

3. Modul nach einem der vorhergehenden Ansprüche,
wobei die Konfigurationseinheit außerdem ausgebildet ist, mindestens eine kombinierte (2122) anwender- und herstellerspezifische Wiederherstellungsaktion in das Computerprogramm für die Wiederherstellung des Geräts zu konfigurieren.

4. Modul nach einem der vorhergehenden Ansprüche,
wobei das Computerprogramm für die Wiederherstellung einen Modifikationsschutz aufweist.

5. Modul nach einem der vorhergehenden Ansprüche,
wobei der stattgefundene Angriff erkannt (11) wurde anhand von:
- einem Host-Based Intrusion Detection System (HIDS) und/oder
- einer Überwachung auf Hardwareebene, insbesondere von Bus-Zugriffen, Ein- und Ausgabeschnittstellen-Zugriffen, Speicherzugriffen, einem Power Fingerprinting, einem Auslösen von Exploit Protection Schutzmaßnahmen, insbesondere einer Verletzung einer Control-Flow-Integritätsüberwachung oder eines Stack-Schutzes.

6. Modul nach einem der vorhergehenden Ansprüche,
wobei die Empfangseinheit ausgebildet ist, die Nachricht (14) bezüglich des stattgefundenen Angriffs von einem Modul zur Angriffserkennung (1) zu empfangen.

7. Modul nach einem der vorhergehenden Ansprüche,
wobei die Nachricht (14) bezüglich des stattgefundenen Angriffs eine anwenderspezifische Geräteintegritätsrichtlinie (13) berücksichtigt.

8. Modul nach einem der vorhergehenden Ansprüche,
wobei die Konfigurationseinheit ausgebildet ist, eine Vielzahl von anwenderspezifischen Wiederherstellungsaktionen (22) in das Computerprogramm für die Wiederherstellung des Geräts (D) zu konfigurieren.

9. Modul nach einem der vorhergehenden Ansprüche,
wobei die Konfigurationseinheit ausgebildet ist, die mindestens eine anwenderspezifische Wiederherstellungsaktion (22) in das Computerprogramm für die Wiederherstellung des Geräts (D) in Abhängigkeit des stattgefundenen Angriffs zu konfigurieren.

10. Modul nach einem der vorhergehenden Ansprüche,
wobei die Konfigurationseinheit ausgebildet ist, die mindestens eine anwenderspezifische Wiederherstellungsaktion (22) in das Computerprogramm für die Wiederherstellung des Geräts (D) in Abhängigkeit einer Integritätsverletzung durch den stattgefundenen Angriff zu konfigurieren.

11. Modul nach einem der vorhergehenden Ansprüche,
wobei die mindestens eine anwenderspezifische Wiederherstellungsaktion (22) ausgebildet ist als:
- ein Anhalten eines Prozessors (CPU) des Geräts,
- ein Sperren von mindestens einer Ein- und AusgabeSchnittstelle (I/O) des Geräts,
- ein Sperren eines Zugriffs auf mindestens eine Zusatzkomponente des Geräts,
- ein Sperren und/oder ein Einschränken von mindestens einem Kommunikationsmodul (CM) des Geräts,
- ein Sperren und/oder ein Einschränken von mindestens einer Kommunikationsschnittstelle des Geräts, und/oder
- ein Löschen und/oder ein Archivieren eines Arbeitsspeichers (RAM, F) des Geräts.

12. Gerät (D) aufweisend ein Modul (2) nach einem der vorhergehenden Ansprüche.

13. Gerät (D) nach Anspruch 12,
ausgebildet als:
- ein Steuergerät,
- ein Internet-of-Things-Gerät,
- ein eingebettetes System,
- ein industrielles Steuergerät und/oder
- eine speicherprogrammierbare Steuerung.

14. Gerät nach Anspruch 12 oder 13,
außerdem aufweisend:
- ein Modul zur Angriffserkennung (1).

15. Verfahren zum Wiederherstellen eines Geräts (D),
mit den Schritten:
- ein Empfangen einer Nachricht (14) bezüglich eines stattgefundenen Angriffs auf das Gerät (D),
- ein Konfigurieren mindestens einer anwenderspezifischen Wiederherstellungsaktion (22) in ein Computerprogramm für die Wiederherstellung des Geräts (D), und
- ein Ausführen des Wiederherstellens des Geräts (D) anhand des Computerprogramms zur Gerätewiederherstellung bei Vorliegen der Nachricht (14) bezüglich des stattgefundenen Angriffs.
